# EUROPEAN PATENT APPLICATION

(11) **EP 2 958 353 A1**
(43) Date of publication of application: **23.12.2015**
(21) Application number: 13875136.7
(22) Date of filing: 18.02.2013
(51) Int. Cl.: H04W 12/04, H04W 88/12

(54) **METHOD AND METHOD FOR REALIZING COMMUNICATION IN WLAN**

(71) Applicant: Huawei Technologies Co., Ltd., Longgang District Shenzhen, Guangdong 518129 (CN)
(72) Inventor: XUE, Li, Shenzhen Guangdong 518129 (CN); LI, Jingwei, Shenzhen Guangdong 518129 (CN); GAO, Hongliang, Shenzhen Guangdong 518129 (CN); CHEN, Gang, Shenzhen Guangdong 518129 (CN); QIAN, Guofeng, Shenzhen Guangdong 518129 (CN)
(74) Representative: Thun, Clemens
(86) International application number: PCT/CN2013/071647
(87) International publication number: WO 2014/124561

(57) **Abstract**

A method for implementing communication in a WLAN is provided, where the method includes: receiving, by a routing device, a packet from an authentication server, where the packet carries an identifier of a user terminal and a pairwise master key PMK corresponding to the identifier of the user terminal, the routing device is an endpoint that initiates EAP authentication, and the routing device manages the user terminal; obtaining, by the routing device from the packet, the identifier of the user terminal and the PMK; sending, by the routing device, a control message to an access controller AC, where the control message carries the identifier of the user terminal and the PMK, the AC manages the AP, and the user terminal accesses the WLAN by using the AP; and receiving, by the routing device, a response message from the AC. The solution provided in the embodiments of the present invention can reduce a cost of deploying a WLAN.

## Description

### TECHNICAL FIELD

Embodiments of the present invention relate to the communications field, and in particular, to a method and a system for implementing communication in a WLAN.

### BACKGROUND

As mobile broadband services develop extensively, a cellular network such as a third generation (3rd generation, 3G) network or a Long Term Evolution (long term evolution, LTE) network is increasingly incapable of meeting a growing requirement for bandwidth. As a short-range wireless communications technology, a wireless local area network (wireless local area network, WLAN) may be considered as a complement to a cellular mobile service, and offers an operator a good shortcut to provide a multilayer mobile service, thereby relieving a burden of the operator. In another respect, the WLAN can provide free spectrum resources, thereby lowering a requirement for commercial use of a WLAN technology. Recent years have witnessed an upsurge in an application of the WLAN technology, and major operators are deploying the WLAN vigorously, and a market prospect is extensive.

For example, an autonomous structure of a fat access point may be used for a networking manner of a WLAN. Generally, most networks that use a fat access point are small-sized networks, for example, a small office and home office (small office and home office, SOHO). Optionally, a centralized structure including a fit access point and an access controller (access controller, AC) may be used for a networking manner of a WLAN. The centralized structure is generally used in a hotspot area, for example, a public area such as an airport, a hotel, or a cafe. A network of the centralized structure includes an access point (access point, AP) and an AC. In an existing network, the AC manages the AP. In addition, the AC manages a user terminal, for example, authentication between an Authentication, Authorization, and Accounting server (Authentication, Authorization and Accounting server, AAA server) and the user terminal is implemented by using the AC. For example, the user terminal may be a terminal device, for example, a computer, a mobile phone, a personal digital assistant (personal digital assistant, PDA), or another identifiable terminal device. However, most ACs in an existing network are switches with low configuration. When it is required to implement a large-scale WLAN, especially an operator-level WLAN, a switch with low configuration cannot implement a user management function in the large-scale WLAN. Therefore, it is required to deploy an AC with high configuration, and a cost is high.

### SUMMARY

In view of this, embodiments of the present invention provide a method and a device for deploying a WLAN at a low cost, to reduce a cost of deploying a large-scale WLAN.

According to a first aspect, a method for implementing communication in a WLAN is provided, where the method includes the following operations: receiving, by a routing device, a packet from an authentication server, where the packet carries an identifier of a user terminal and a pairwise master key (PMK) corresponding to the identifier of the user terminal, the routing device is an endpoint that initiates Extensible Authentication Protocol (EAP) authentication, and the routing device manages the user terminal; obtaining, by the routing device from the packet, the identifier of the user terminal and the PMK; sending, by the routing device, a control message to an access controller (AC), where the control message carries the identifier of the user terminal and the PMK, the AC manages an AP, and the user terminal accesses the WLAN by using the AP; and receiving, by the routing device, a response message from the AC, where the response message is used to respond to the control message.

According to the first aspect, a first implementation manner is provided, where the control message is an extended Remote Authentication Dial In User Service (RADIUS) message.

According to the first implementation manner of the first aspect, a second implementation manner is provided, where the control message is a key-of-announcement message (Key-of-Announcement, KOA) message.

According to the first aspect, or the first or second implementation manner of the first aspect, a third implementation manner is provided, where the response message is an acknowledgment (ACK) message, and the ACK message is used to indicate that the AC receives the key.

According to the first aspect, or the first or second implementation manner of the first aspect, a fourth implementation manner is provided, where the response message is a negative acknowledgment (NAK) message, and the negative acknowledgment message is used to indicate that the key received by the AC is incorrect.

According to the fourth implementation manner of the first aspect, a fifth implementation manner is provided, where the method further includes: sending the control message again if the response message received by the routing device is the negative acknowledgment message.

According to the first aspect, or any one of the foregoing implementation manners of the first aspect, a sixth implementation manner is provided, where before the sending, by the routing device, a control message to an access controller AC, the method further includes: receiving, by the routing device, a request message from the AC, where the request message is used to request the PMK corresponding to the identifier of the user terminal.

According to the first aspect, or any one of the foregoing implementation manners of the first aspect, a seventh implementation manner is provided, where the method further includes: sending the control message again if the routing device receives no response message from the AC within a preset time.

According to the first aspect, or any one of the foregoing implementation manners of the first aspect, an eighth implementation manner is provided, where the method further includes: stopping sending the control message if the routing device receives no response message from the AC within N consecutive preset time periods.

According to a second aspect, a method for implementing communication in a WLAN is provided, where the method includes the following operations: receiving, by an AC, a control message from a routing device, where the control message carries an identifier of a user terminal and a PMK corresponding to the identifier of the user terminal, the routing device is an endpoint that initiates EAP authentication, and the routing device manages the user terminal; encrypting, by a data encrypting node, a data packet according to the PMK, where the data packet comes from the user terminal or is sent to the user terminal; and sending, by the AC, a response message to the routing device, where the AC manages an AP, and the user terminal accesses the WLAN by using the AP.

According to the second aspect, a first implementation manner is provided, where the response message is an extended RADIUS packet.

According to the second aspect, or the first implementation manner of the second aspect, a second implementation manner is provided, where the data encrypting node is the AC; and the encrypting, by a data encrypting node, a data packet according to the PMK includes: generating, by the AC, a pairwise transient key (PTK) and a group transient key (GTK) according to the PMK; encrypting, by the AC by using the PTK, the data packet if the data packet is a unicast packet; and encrypting, by the AC by using the GTK, the data packet if the data packet is a multicast packet.

According to the second aspect, or the first implementation manner of the second aspect, a third implementation manner is provided, where the data encrypting node is the AP; and the encrypting, by a data encrypting node, a data packet according to the PMK includes: receiving, by the AP, the identifier of the user terminal and the PMK that are sent by the AC; generating, by the AP, a PTK and a GTK according to the PMK; encrypting, by the AP by using the PTK, the data packet if the data packet is a unicast packet; and encrypting, by the AP by using the GTK, the data packet if the data packet is a multicast packet.

According to the second aspect, or the first implementation manner of the second aspect, a fourth implementation manner is provided, where the data encrypting node is the AP; and the encrypting, by a data encrypting node, a data packet according to the PMK includes: receiving, by the AP, the identifier of the user terminal, a PTK, and a GTK that are sent by the AC, where the PTK and the GTK are generated by the AC according to the PMK; encrypting, by the AP by using the PTK, the data packet if the data packet is a unicast packet; and encrypting, by the AP by using the GTK, the data packet if the data packet is a multicast packet.

According to the second aspect, or any one of the foregoing implementation manners of the second aspect, before the receiving, by an AC, a control message from a routing device, the method further includes: sending, by the AC, a request message to the routing device, where the request message is used to request the PMK corresponding to the identifier of the user terminal.

According to a third aspect, a routing device is provided, where the routing device is an endpoint that initiates EAP authentication, the routing device manages a user terminal, and the routing device includes: a sending and receiving unit and a processing unit; where the sending and receiving unit is configured to receive a packet from an authentication server, where the packet carries an identifier of the user terminal and a PMK corresponding to the identifier of the user terminal; and the processing unit is configured to obtain the identifier of the user terminal and the PMK from the packet; where the sending and receiving unit is further configured to send a control message to an AC, where the control message carries the identifier of the user terminal and the PMK, the AC manages an AP, and the user terminal accesses a WLAN by using the AP; and the sending and receiving unit is further configured to receive a response message from the AC, where the response message is used to respond to the control message.

According to the third aspect, a first implementation manner is provided, where the control message is an extended RADIUS packet.

According to the first implementation manner of the third aspect, a second implementation manner is provided, where the control message is a KOA message.

According to the third aspect, or any one of the foregoing implementation manners of the third aspect, a third implementation manner is provided, where the response message is an acknowledgment ACK message, and the ACK message is used to indicate that the AC receives the key.

According to the third aspect, or the first or second implementation manner of the third aspect, a fourth implementation manner is provided, where the response message is a negative acknowledgment message, and the negative acknowledgment message is used to indicate that the key received by the AC is incorrect.

According to a fourth aspect, a network device is provided, where the network device manages an AP, and the network device includes: a sending and receiving unit and a processing unit; where the sending and receiving unit is configured to receive a control message from a routing device, where the control message carries an identifier of a user terminal and a PMK corresponding to the identifier of the user terminal, the routing device is an endpoint that initiates EAP authentication, and the routing device manages the user terminal; and the processing unit is configured to generate a response message, where the response message is used to respond to the control message; where the sending and receiving unit is further configured to send the response message to the routing device, where the user terminal accesses a WLAN by using the AP.

According to the fourth aspect, a first implementation manner is provided, where the response message is an ACK message.

According to the fourth aspect, a second implementation manner is provided, where the processing unit is further configured to determine whether the control message is correct, where if the control message is incorrect, the response message is a negative acknowledgment message.

According to the fourth aspect, or the first implementation manner of the fourth aspect, a third implementation manner is provided, where the sending and receiving unit is further configured to receive a data packet, and the data packet comes from the user terminal or is sent to the user terminal; and the processing unit is further configured to: generate a PTK and a GTK according to the PMK; encrypt the data packet by using the PTK if the data packet is a unicast packet; and encrypt the data packet by using the GTK if the data packet is a multicast packet.

According to the fourth aspect, or the first implementation manner of the fourth aspect, a fourth implementation manner is provided, where the processing unit is further configured to determine the AP according to the identifier of the user terminal; and the sending and receiving unit is further configured to send the identifier of the user terminal and the PMK to the AP.

According to the fourth aspect, or the first implementation manner of the fourth aspect, a fifth implementation manner is provided, where the processing unit is further configured to generate a PTK and a GTK according to the PMK, and determine the AP according to the identifier of the user terminal; and the sending and receiving unit is further configured to send the identifier of the user terminal, the PTK, and the GTK to the AP.

According to a fifth aspect, a network system is provided, where the network system includes a routing device and an AC, where the routing device is an endpoint that initiates EAP authentication, the routing device is configured to manage a user terminal, and the AC is configured to manage an AP; where the routing device is further configured to: receive a packet from an authentication server, where the packet carries an identifier of the user terminal and a pairwise master key PMK corresponding to the identifier of the user terminal; obtain the identifier of the user terminal and the PMK from the packet; and send a control message to the AC, where the control message carries the identifier of the user terminal and the PMK, and the user terminal accesses a WLAN by using the AP; and the AC is configured to send a response message to the routing device, where the response message is used to respond to the control message.

According to the fifth aspect, a first implementation manner is provided, where the network system further includes the AP.

In the foregoing technical solutions, a routing device obtains an identifier of a user terminal and a PMK corresponding to the identifier of the user terminal from a packet that comes from an authentication server; and sends a control message that carries the identifier of the user terminal and the PMK to an AC, where the routing device manages the user terminal, and the AC manages an AP. Therefore, during implementation of a WLAN, especially a large-scale WLAN such as an operator-level WLAN, it is unnecessary to deploy an AC with high configuration to implement management on a user terminal. In addition, a routing device in an existing network can be used to the fullest for WLAN deployment, thereby reducing a cost and implementing deployment of the large-scale WLAN more economically.

### BRIEF DESCRIPTION OF DRAWINGS

To describe the technical solutions of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a simplified schematic diagram of networking of a WLAN according to an embodiment of the present invention;
FIG. 2 is a simplified schematic diagram of networking of a WLAN according to still another embodiment of the present invention;
FIG. 3 is a simplified schematic diagram of networking of a WLAN according to an embodiment of the present invention;
FIG. 4 is a simplified schematic diagram of networking of a WLAN according to still another embodiment of the present invention;
FIG. 5 is a simplified flowchart of a method for implementing communication in a WLAN according to an embodiment of the present invention;
FIG. 6 is a simplified flowchart of a method for implementing communication in a WLAN according to an embodiment of the present invention;
FIG. 7 is a simplified structural block diagram of a routing device according to an embodiment of the present invention;
FIG. 8 is a simplified structural block diagram of a routing device according to still another embodiment of the present invention;
FIG. 9 is a simplified structural block diagram of an AC according to an embodiment of the present invention;
FIG. 10 is a simplified structural block diagram of an AC according to still another embodiment of the present invention;
FIG. 11 is a simplified structural block diagram of a network system according to an embodiment of the present invention;
FIG. 12 is a diagram of a format of a control message according to an embodiment of the present invention;
FIG. 13 is a diagram of an attribute format of a control message according to an embodiment of the present invention;
FIG. 14 is a diagram of an attribute format of a control message according to an embodiment of the present invention;
FIG. 15 is a diagram of a format of a response message according to an embodiment of the present invention; and
FIG. 16 is a diagram of an attribute format of a response message according to an embodiment of the present invention.

### DESCRIPTION OF EMBODIMENTS

To make the objectives, technical solutions, and advantages of the present invention clearer, the following clearly and completely describes the technical solutions of the present invention with reference to the accompanying drawings in the embodiments of the present invention. Apparently, the following described embodiments are a part of the embodiments of the present invention. Based on the embodiments of the present invention, a person of ordinary skill in the art can obtain other embodiments that can solve the technical problem of the present invention and implement the technical effect of the present invention by equivalently altering some or all the technical features even without creative efforts. Apparently, the embodiments obtained by means of alteration do not depart from the scope disclosed in the present invention.

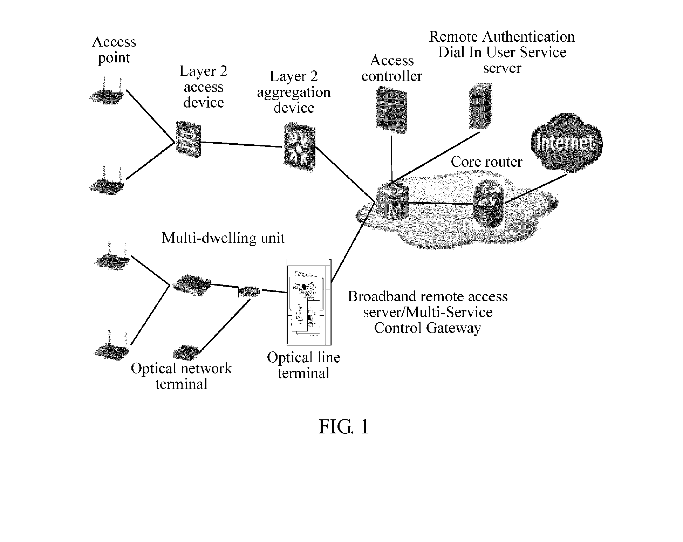

FIG. 1 is a simplified schematic diagram of networking of a WLAN according to an embodiment of the present invention. Four access points (AP) are shown in FIG. 1, and two of them access the Internet by using a WLAN technology. An AP can access the Internet by using a Layer 2 access device, a Layer 2 aggregation device, a routing device, and a core router (core router, CR). A routing device shown in FIG. 1 is an endpoint that initiates Extensible Authentication Protocol (Extensible Authentication Protocol, EAP) authentication. Exemplarily, the routing device may be a broadband remote access server (broadband remote access server, BRAS), or a Multi-Service Control Gateway (Multi-Service Control Gateway, MSCG). An access controller (AC) manages an AP, and the AC does not participate in data forwarding. The routing device manages a user terminal (not shown in FIG. 1). In a network shown in FIG. 1, authentication is performed on the user terminal by using a Remote Authentication Dial In User Service server (Remote Authentication Dial In User Service server, RADIUS server). The RADIUS server shown in FIG. 1 is merely exemplary, and another AAA server may be used. Optionally, other devices such as a multi-dwelling unit (multi-dwelling unit, MDU), an optical network terminal (optical network terminal, ONT), and an optical line terminal (optical line terminal, OLT) are also shown in the network shown in FIG. 1. FIG. 1 is merely used to present a network structure exemplarily, and in a practical application, the network structure may be diversified.

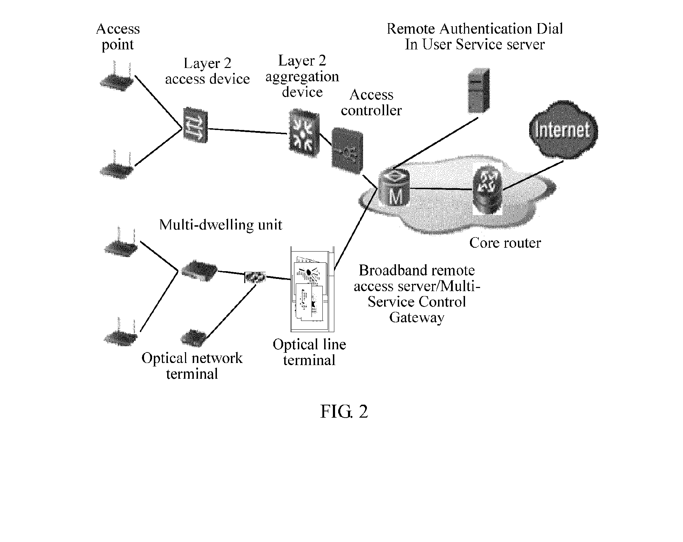

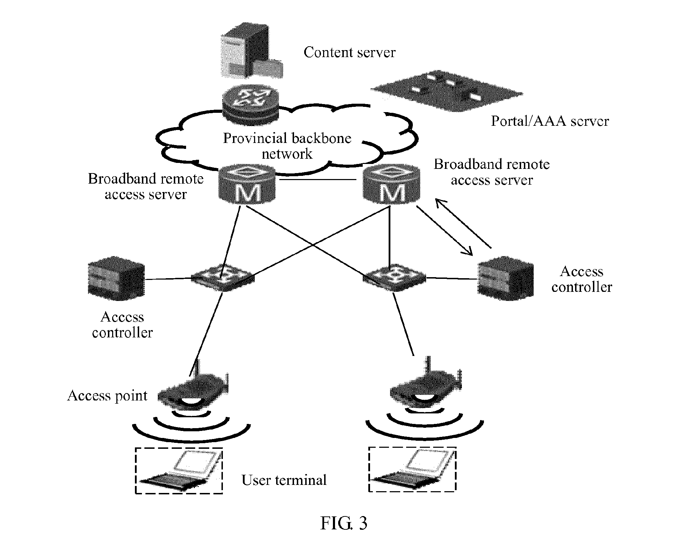

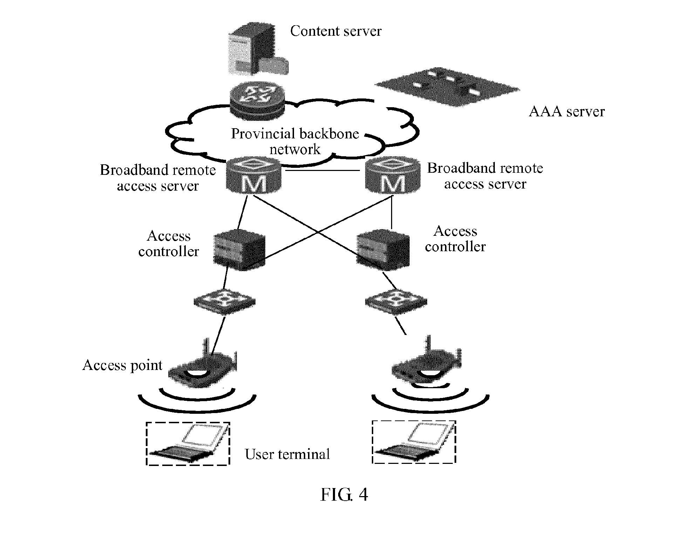

FIG. 2 is a simplified schematic diagram of networking of a WLAN according to still another embodiment of the present invention. An access controller (AC) shown in FIG. 2 participates in data forwarding. FIG. 3, which shows a user terminal, is a simplified schematic diagram of networking of a WLAN according to an embodiment of the present invention, where an AC does not participate in data forwarding. FIG. 4, which shows a user terminal, is a simplified schematic diagram of networking of a WLAN according to another embodiment of the present invention, where an AC participates in data forwarding.

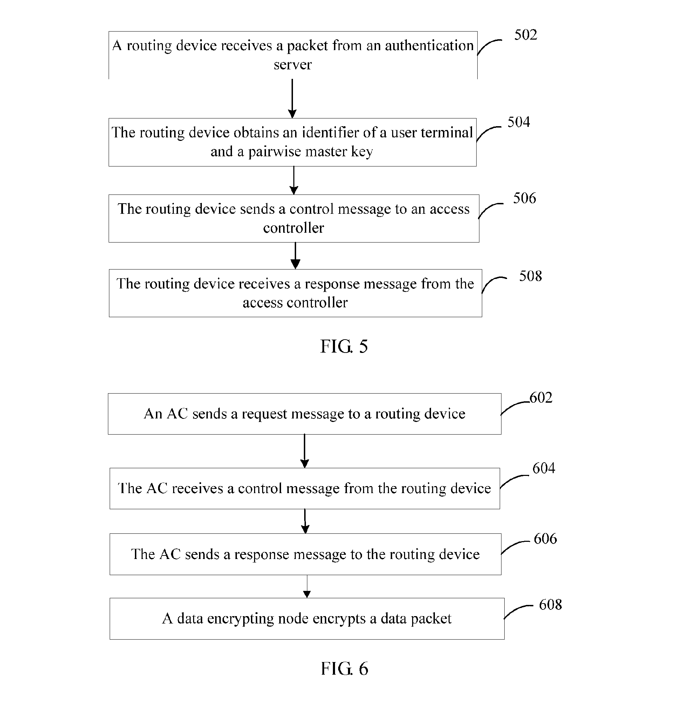

FIG. 5 shows a simplified flowchart of a method for implementing communication in a WLAN according to an embodiment of the present invention. The method shown in FIG. 5 includes operations shown in 502 to 508. The method shown in FIG. 5 may be applied to a network shown in FIG. 1 to FIG. 4, or may be applied to another WLAN network of a centralized structure.

502. A routing device receives a packet from an authentication server, where the routing device is an endpoint that initiates EAP authentication, the routing device manages a user terminal, and the packet carries an identifier of the user terminal and a pairwise master key (pair-wise master key, PMK) corresponding to the identifier of the user terminal. For example, when the user terminal accesses a network, the user terminal exchanges a message with the authentication server by using the routing device, so that the authentication server authenticates the user terminal. When forwarding the message between the user terminal and the authentication server, the routing device obtains the PMK from the packet that comes from the authentication server. For specific implementation, refer to RFC 3748 or Institute of Electrical and Electronics Engineers (Institute of Electrical and Electronics Engineers, IEEE) 802.1X.

504. The routing device obtains the identifier of the user terminal and the PMK from the packet. 506. The routing device sends a control message to an AC, where the control message carries the identifier of the user terminal and the PMK, the AC manages an AP, and the user terminal accesses the WLAN by using the AP. For example, if the routing device corresponds to multiple ACs, the routing device may determine, according to the identifier of the user terminal, an AC that manages the AP, and then, sends the control message to the AC. Optionally, the control message may be an extended RADIUS packet, for example, a key-of-announcement message (Key-of-Announcement, KOA) message. The KoA message may be an extended change-of-authorization (change of authorization, CoA) message.

508. The routing device receives a response message from the AC, where the response message is used to respond to the control message. For example, the response message may be an acknowledgment (acknowledge, ACK for short) message, which is used to indicate that the AC receives the PMK. Optionally, if receiving no response message from the AC within a preset time, the routing device sends the control message again. Optionally, if receiving no response message from the AC within N consecutive preset time periods (N is a natural number greater than 1), the routing device stops sending the control message, where a value of N may be preconfigured on the routing device.

For another example, the response message may be a negative acknowledgment (NAK) message, which is used to indicate that the key received by the AC is incorrect. For example, the control message received by the AC is incorrect, for example, in length and/or in type. Optionally, if the response message received by the routing device is the negative acknowledgment message, the routing device sends the control message again.

Optionally, before the routing device sends the control message to the AC, the method shown in FIG. 5 may further include: sending, by the routing device, a request message sent by the AC, where the request message is used to request the PMK corresponding to the identifier of the user terminal. For example, the request message may be an extended RADIUS packet.

FIG. 6 is a simplified flowchart of a method for implementing communication in a WLAN according to an embodiment of the present invention. The method shown in FIG. 6 includes operations shown in 604 to 608.

604. An AC receives a control message from a routing device, where the control message carries an identifier of a user terminal and a PMK corresponding to the identifier of the user terminal, the routing device is an endpoint that initiates EAP authentication, and the routing device manages the user terminal.

606. The AC sends a response message to the routing device, where the response message is used to respond to the control message, the AC manages an AP, and the user terminal accesses the WLAN by using the AP.

608. A data encrypting node encrypts a data packet according to the PMK, where the data packet comes from the user terminal or is sent to the user terminal. The embodiment shown in FIG. 6 does not constitute limitation on a sequence of performing 608 and 606. The two steps may be performed at the same time, 606 may be performed before 608, or 608 may be performed before 606.

When the AC participates in data forwarding (for example, a network shown in FIG. 2 and FIG. 4), the data encrypting node may be the AC or the AP. When the AC does not participate in data forwarding (for example, a network shown in FIG. 1 and FIG. 3), the data encrypting node may be the AP.

Optionally, when the data encrypting node is the AC, the AC generates a pairwise transient key (Pair-wise Transient Key, PTK) and a group transient key (Group Transient Key, GTK) according to the PMK. The AC encrypts the data packet by using the PTK if the data packet is a unicast packet; and the AC encrypts the data packet by using the GTK if the data packet is a multicast packet.

When the data encrypting node is the AP, optionally, the AP receives the identifier of the user terminal and the PMK that are sent by the AC. The AP generates a PTK and a GTK according to the PMK. The AP encrypts the data packet by using the PTK if the data packet is a unicast packet; and the AP encrypts the data packet by using the GTK if the data packet is a multicast packet. In the operation shown in 604, the AC receives the control message that carries the identifier of the user terminal and the PMK, and may determine the AP according to the identifier of the user terminal, to send the identifier of the user terminal and the PMK to the AP.

When the data encrypting node is the AP, optionally, the AP receives the identifier of the user terminal, a PTK, and a GTK that are sent by the AC, where the PTK and the GTK are generated by the AC according to the PMK. The AP encrypts the data packet by using the PTK if the data packet is a unicast packet; and the AP encrypts the data packet by using the GTK if the data packet is a multicast packet. In the operation shown in 604, the AC receives the control message that carries the identifier of the user terminal and the PMK, generates the PTK and the GTK according to the PMK, and determines the AP according to the identifier of the user terminal, to send the identifier of the user terminal, the PTK, and the GTK to the AP.

Optionally, before 604, the method shown in FIG. 6 may further include 602. The AC sends a request message to the routing device, where the request message is used to request the PMK corresponding to the identifier of the user terminal. For example, the request message may be an extended RADIUS packet.

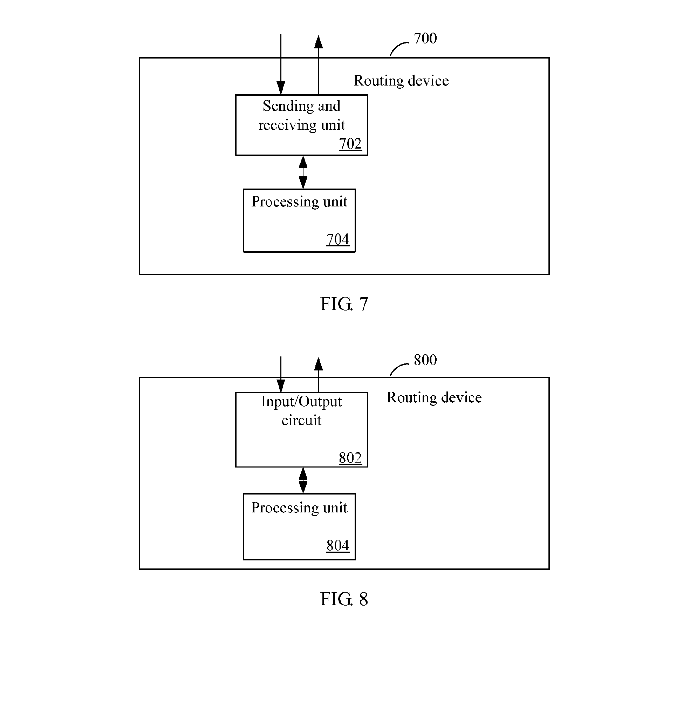

FIG. 7 shows a simplified structural block diagram of a routing device according to an embodiment of the present invention. A routing device 700 is an endpoint that initiates EAP authentication, and the routing device 700 manages a user terminal. As shown in FIG. 7, the routing device 700 includes a sending and receiving unit 702 and a processing unit 704. The sending and receiving unit 702 is configured to receive a packet from an authentication server, where the packet carries an identifier of the user terminal and a PMK corresponding to the identifier of the user terminal. The processing unit 704 is configured to obtain the identifier of the user terminal and the PMK from the packet. The sending and receiving unit 702 is further configured to send a control message to an AC, and receive a response message from the AC, where the control message carries the identifier of the user terminal and the PMK, the AC manages an AP, and the user terminal accesses a WLAN by using the AP. The response message is used to respond to the control message. For example, the response message may be an ACK message, which is used to indicate that the AC receives the PMK. Optionally, if receiving no response message from the AC within a preset time, the sending and receiving unit 702 sends the control message again. Optionally, if receiving no response message from the AC within N consecutive preset time periods (N is a natural number greater than 1), the sending and receiving unit 702 stops sending the control message. The routing device 700 may further include a storage unit, which is configured to store a preconfigured value of N. For another example, the response message may be a negative acknowledgment message, which is used to indicate that the key received by the AC is incorrect. For example, the control message received by the AC is incorrect, for example, in length and/or in type. Optionally, if the response message received by the sending and receiving unit 702 is the negative acknowledgment message, the sending and receiving unit 702 sends the control message again.

FIG. 8 shows a simplified structural block diagram of a routing device according to still another embodiment of the present invention. A routing device 800 is an endpoint that initiates EAP authentication, and the routing device 800 manages a user terminal. As shown in FIG. 8, the routing device 800 includes an input/output circuit 802 and a processor 804. The input and output circuit 802 is configured to receive a packet from an authentication server, where the packet carries an identifier of the user terminal and a PMK corresponding to the identifier of the user terminal. The processor 804 is configured to obtain the identifier of the user terminal and the PMK from the packet. The input and output circuit 802 is further configured to send a control message to an AC, and receive a response message from the AC, where the control message carries the identifier of the user terminal and the PMK, the AC manages an AP, and the user terminal accesses a WLAN by using the AP. The response message is used to respond to the control message. For example, the response message may be an ACK message, which is used to indicate that the AC receives the PMK. Optionally, if receiving no response message from the AC within a preset time, the input and output circuit 802 sends the control message again. Optionally, if receiving no response message from the AC within N consecutive preset time periods (N is a natural number greater than 1), the input and output circuit 802 stops sending the control message. Optionally, the routing device 800 may further include a memory, which is configured to store a preconfigured value of N. For another example, the response message may be a negative acknowledgment message, which is used to indicate that the key received by the AC is incorrect. For example, the control message received by the AC is incorrect, for example, in length and/or in type. Optionally, if the response message received by the input and output circuit 802 is the negative acknowledgment message, the input and output circuit 802 sends the control message again.

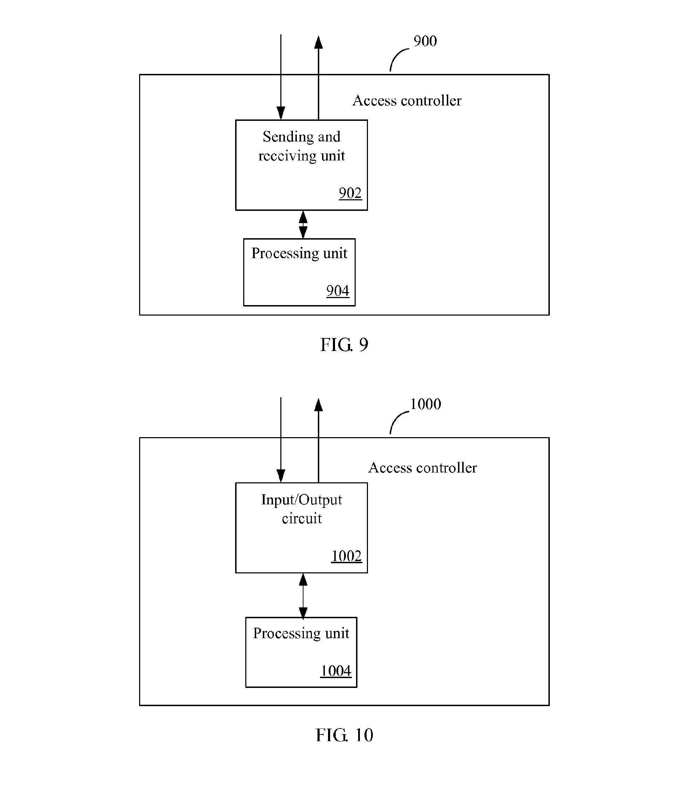

FIG. 9 shows a simplified structural block diagram of an AC according to an embodiment of the present invention. The AC manages an AP. As shown in FIG. 9, an AC 900 includes a sending and receiving unit 902 and a processing unit 904. The sending and receiving unit 902 is configured to receive a control message from a routing device, where the control message carries an identifier of a user terminal and a PMK corresponding to the identifier of the user terminal, the routing device is an endpoint that initiates EAP authentication, and the routing device manages the user terminal. The processing unit 904 is configured to generate a response message, where the response message is used to respond to the control message. The sending and receiving unit 902 is further configured to send the response message to the routing device, where the user terminal accesses a WLAN by using the AP. For example, the response message may be an ACK message. Optionally, the processing unit 904 may be further configured to determine whether the control message is correct, for example, whether a length and/or a type of the control message are correct. If the length and/or the type of the control message are incorrect, the response message generated by the processing unit 904 is a negative acknowledgment message.

Optionally, the sending and receiving unit 902 may be further configured to receive a data packet, where the data packet comes from the user terminal or is sent to the user terminal. For example, the processing unit 904 may be further configured to: generate a PTK and a GTK according to the PMK; encrypt the data packet by using the PTK if the data packet is a unicast packet; and encrypt the data packet by using the GTK if the data packet is a multicast packet.

Optionally, the processing unit 904 may be further configured to determine the AP according to the identifier of the user terminal. The sending and receiving unit 902 may be further configured to send the identifier of the user terminal and the PMK to the AP.

Optionally, the processing unit 904 may be further configured to generate a PTK and a GTK according to the PMK, and determine the AP according to the identifier of the user terminal. The sending and receiving unit 902 may be further configured to send the identifier of the user terminal, the PTK, and the GTK to the AP.

FIG. 10 shows a simplified structural block diagram of an AC according to an embodiment of the present invention. The AC manages an AP. As shown in FIG. 10, an AC 1000 includes an input and output circuit 1002 and a processor 1004. The input and output circuit 1002 is configured to receive a control message from a routing device, where the control message carries an identifier of a user terminal and a PMK corresponding to the identifier of the user terminal, the routing device is an endpoint that initiates EAP authentication, and the routing device manages the user terminal. The processor 1004 is configured to generate a response message, where the response message is used to respond to the control message. The input and output circuit 1002 is further configured to send the response message to the routing device. The user terminal accesses a WLAN by using the AP. For example, the response message may be an ACK message. Optionally, the processor 1004 may be further configured to determine whether the control message is correct, for example, whether a length and/or a type of the control message are correct. If the length and/or the type of the control message are incorrect, the response message generated by the processor 1004 is a negative acknowledgment message.

Optionally, the input and output circuit 1002 may be further configured to receive a data packet, where the data packet comes from the user terminal or is sent to the user terminal. For example, the processor 1004 may be further configured to: generate a PTK and a GTK according to the PMK; encrypt the data packet by using the PTK if the data packet is a unicast packet; and encrypt the data packet by using the GTK if the data packet is a multicast packet.

Optionally, the processor 1004 may be further configured to determine the AP according to the identifier of the user terminal. The input and output circuit 1002 may be further configured to send the identifier of the user terminal and the PMK to the AP.

Optionally, the processor 1004 may be further configured to generate a PTK and a GTK according to the PMK, and determine the AP according to the identifier of the user terminal. The input and output circuit 1002 may be further configured to send the identifier of the user terminal, the PTK, and the GTK to the AP.

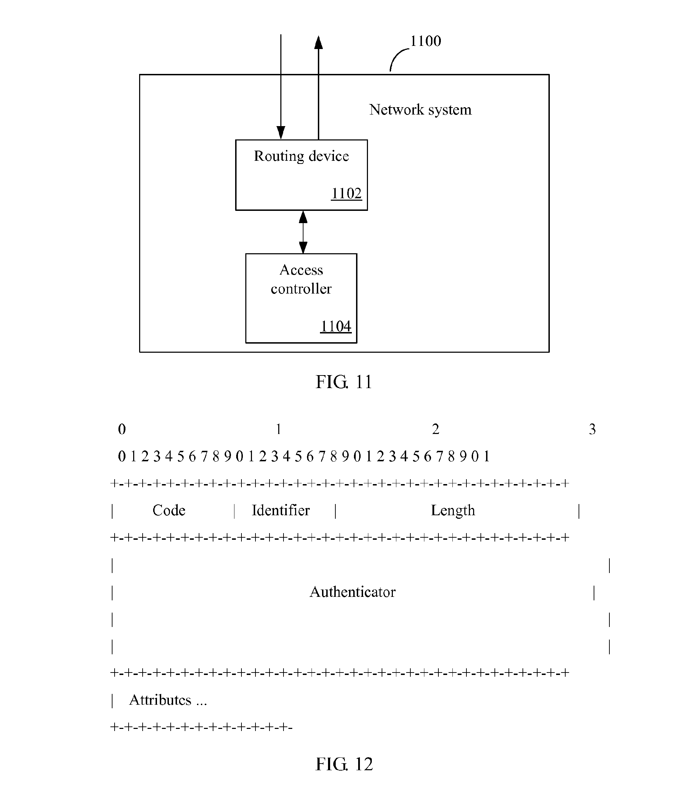

FIG. 11 shows a simplified structural block diagram of a network system according to an embodiment of the present invention. A network system 1100 includes a routing device 1102 and an AC 1104, where the routing device 1102 is an endpoint that initiates EAP authentication. The routing device is configured to manage a user terminal. The AC 1104 is configured to manage an AP. The routing device 1102 is further configured to receive a packet from an authentication server, where the packet carries an identifier of the user terminal and a pairwise master key PMK corresponding to the identifier of the user terminal. The routing device 1102 is further configured to obtain the identifier of the user terminal and the PMK from the packet, and send a control message to the AC 1104, where the control message carries the identifier of the user terminal and the PMK, and the user terminal accesses a WLAN by using the AP. The AC 1104 is configured to send a response message to the routing device 1102, where the response message is used to respond to the control message.

Optionally, the system shown in FIG. 11 may further include the AP. For example, for a networking relationship of the AP, the routing device 1102, and the AC 1104, refer to a structure shown in FIG. 1 to FIG. 4.

For technical solution details of the devices shown in FIG. 7 to FIG. 10, and the system shown in FIG. 11, refer to descriptions of the method embodiments shown in FIG. 5 and FIG. 6, which are not described herein again.

FIG. 12 shows a diagram of a format of a control message according to an embodiment of the present invention. As shown in FIG. 12, the control message may be a KOA message, and the control message includes following fields: a type (Code) field, an identifier (Identifier) field, and a length (Length) field. The code (Code) field is one octet (octet) and is used to identify a type of a RADIUS packet. A value of code, which is unallocated in an existing RADIUS-related protocol, is used as a value of this code, for example, this code may be equal to 100. The identifier (Identifier) field is one octet, and this Identifier may be 0 to 255. Identifier may help match a control message and a response message, that is, to identify the control message and the response message that responds to the control message. The length (Length) field is two octets and is used to mark a length of the RADIUS packet, including fields such as Code, Identifier, Length, Authenticator (authenticator), and Attributes (attribute). For example, a value of the length field may be 62. Authenticator is sixteen octets, and a value of Authenticator is used to authenticate a message between a RADIUS server and a user terminal. The value of this Authenticator is a 16-octet MD5 checksum (checksum), and Authenticator may be calculated by referring to a manner described in RFC 3576. A type-length-value (Type-Length-Value, TLV) format is used for the Attributes field, for example, a media access control address of a user terminal

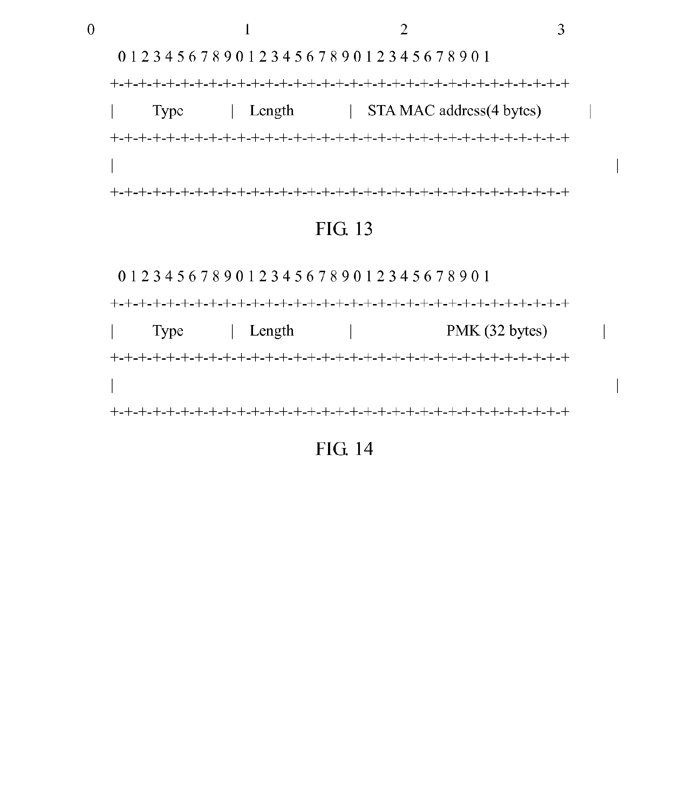

(STA MAC address) shown in FIG. 13, and a PMK shown in FIG. 14. Attributes shown in FIG. 13 is a STA MAC address, of which Type (Type) is 31, Length (Length) is 8, and Value (Value) is a MAC address of the user terminal. Attributes shown in FIG. 14 is a PMK, of which Type is 17, Length is 34, and Value is the PMK. A value undefined in an existing RADIUS-related protocol may be used for Type of Attributes shown in FIG. 14.

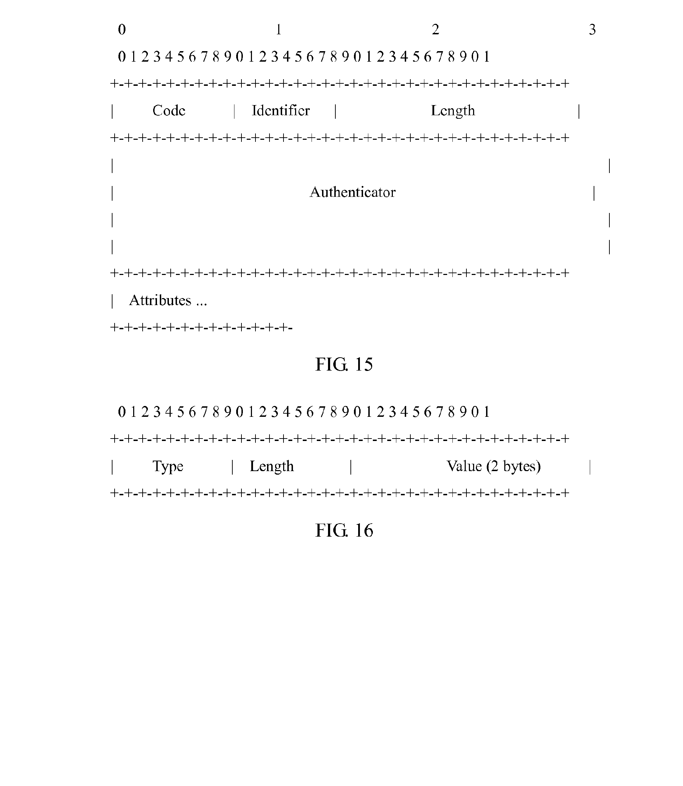

FIG. 15 shows a diagram of a format of a response message according to an embodiment of the present invention. As shown in FIG. 15, the response message may be an extended RADIUS message. Compared with that in the control message shown in FIG. 12, a value of code, which is unallocated in an existing RADIUS-related protocol, may be used for code in the response message shown in FIG. 15, and may be different from a value of code, which is in the control message. For example, code in the response message may be equal to 101. For example, a value of the length field in the response message may be 32. The response message shown in FIG. 15 includes a TLV shown in FIG. 13 and a TLV shown in FIG. 16. As shown in FIG. 16, a value undefined in an existing RADIUS-related protocol, for example, 21 or 18, may be used for Type; Length is 4; and Value is an error code. If the error code is 0, it indicates that the response message is an ACK message; if the error code is not 0, it indicates that the response message is a NAK message. Alternatively, a value of code, which is used in the NAK message, may be different from that used in the ACK message.

Persons of ordinary skill in the art may understand that all or some of the steps of the method embodiments may be implemented by program instructing relevant hardware. The foregoing program may be stored in a computer-readable storage medium. When the program runs, the steps of the foregoing method embodiments are performed. The foregoing storage medium includes: any medium that can store program code, such as a read-only memory (read-only Memory, ROM for short), a random access memory (random access memory, RAM for short), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for implementing communication in a wireless local area network WLAN, wherein the method comprises:
receiving, by a routing device, a packet from an authentication server, wherein the packet carries an identifier of a user terminal and a pairwise master key PMK corresponding to the identifier of the user terminal, the routing device is an endpoint that initiates Extensible Authentication Protocol EAP authentication, and the routing device manages the user terminal;
obtaining, by the routing device from the packet, the identifier of the user terminal and the PMK;
sending, by the routing device, a control message to an access controller AC, wherein the control message carries the identifier of the user terminal and the PMK, the AC manages an AP, and the user terminal accesses the WLAN by using the AP; and
receiving, by the routing device, a response message from the AC, wherein the response message is used to respond to the control message.

2. The method according to claim 1, wherein the control message is an extended Remote Authentication Dial In User Service RADIUS packet.

3. The method according to claim 2, wherein the control message is a key-of-announcement message KOA message.

4. The method according to any one of claims 1 to 3, wherein the response message is an acknowledgment ACK message, and the ACK message is used to indicate that the AC receives the key.

5. The method according to any one of claims 1 to 3, wherein the response message is a negative acknowledgment message, and the negative acknowledgment message is used to indicate that the key received by the AC is incorrect.

6. The method according to claim 5, further comprising:
sending the control message again if the response message received by the routing device is the negative acknowledgment message.

7. The method according to any one of claims 1 to 6, wherein the method further comprises:
sending the control message again if the routing device receives no response message from the AC within a preset time.

8. A method for implementing communication in a wireless local area network WLAN, wherein the method comprises:
receiving, by an AC, a control message from a routing device, wherein the control message carries an identifier of a user terminal and a pairwise master key PMK corresponding to the identifier of the user terminal, the routing device is an endpoint that initiates Extensible Authentication Protocol EAP authentication, and the routing device manages the user terminal;
encrypting, by a data encrypting node, a data packet according to the PMK, wherein the data packet comes from the user terminal or is sent to the user terminal; and
sending, by the AC, a response message to the routing device, wherein the response message is used to respond to the control message, the AC manages an AP, and the user terminal accesses the WLAN by using the AP.

9. The method according to claim 8, wherein the response message is an extended RADIUS packet.

10. The method according to claim 8 or 9, wherein the data encrypting node is the AC; and
the encrypting, by a data encrypting node, a data packet according to the PMK comprises:
generating, by the AC, a pairwise transient key PTK and a group transient key GTK according to the PMK;
encrypting, by the AC by using the PTK, the data packet if the data packet is a unicast packet; and
encrypting, by the AC by using the GTK, the data packet if the data packet is a multicast packet.

11. The method according to claim 8 or 9, wherein the data encrypting node is the AP; and
the encrypting, by a data encrypting node, a data packet according to the PMK comprises:
receiving, by the AP, the identifier of the user terminal and the PMK that are sent by the AC;
generating, by the AP, a pairwise transient key PTK and a group transient key GTK according to the PMK;
encrypting, by the AP by using the PTK, the data packet if the data packet is a unicast packet; and
encrypting, by the AP by using the GTK, the data packet if the data packet is a multicast packet.

12. The method according to claim 8 or 9, wherein the data encrypting node is the AP; and
the encrypting, by a data encrypting node, a data packet according to the PMK comprises:
receiving, by the AP, the identifier of the user terminal, a pairwise transient key PTK, and a group transient key GTK that are sent by the AC, wherein the PTK and the GTK are generated by the AC according to the PMK;
encrypting, by the AP by using the PTK, the data packet if the data packet is a unicast packet; and
encrypting, by the AP by using the GTK, the data packet if the data packet is a multicast packet.

13. A routing device, wherein the routing device is an endpoint that initiates Extensible Authentication Protocol EAP authentication, the routing device manages a user terminal, and the routing device comprises:
a sending and receiving unit, configured to receive a packet from an authentication server, wherein the packet carries an identifier of the user terminal and a pairwise master key PMK corresponding to the identifier of the user terminal; and
a processing unit, configured to obtain the identifier of the user terminal and the PMK from the packet; wherein
the sending and receiving unit is further configured to send a control message to an access controller AC, wherein the control message carries the identifier of the user terminal and the PMK, the AC manages an AP, and the user terminal accesses a WLAN by using the AP; and
the sending and receiving unit is further configured to receive a response message from the AC, wherein the response message is used to respond to the control message.

14. The routing device according to claim 13, wherein the control message is an extended Remote Authentication Dial In User Service RADIUS packet.

15. The routing device according to claim 14, wherein the control message is a key-of-announcement message KOA message.

16. The routing device according to any one of claims 13 to 15, wherein the response message is an acknowledgment ACK message, and the ACK message is used to indicate that the AC receives the key.

17. The routing device according to any one of claims 13 to 15, wherein the response message is a negative acknowledgment message, and the negative acknowledgment message is used to indicate that the key received by the AC is incorrect.

18. A network device, wherein the network device manages an access point AP, and the network device comprises a sending and receiving unit and a processing unit; wherein
the sending and receiving unit is configured to receive a control message from a routing device, wherein the control message carries an identifier of a user terminal and a pairwise master key PMK corresponding to the identifier of the user terminal, the routing device is an endpoint that initiates Extensible Authentication Protocol EAP authentication, and the routing device manages the user terminal; and
the processing unit is configured to generate a response message, wherein the response message is used to respond to the control message; wherein
the sending and receiving unit is further configured to send the response message to the routing device, wherein the user terminal accesses a WLAN by using the AP.

19. The device according to claim 18, wherein the response message is an ACK message.

20. The device according to claim 18, wherein the processing unit is further configured to determine whether the control message is correct, wherein if the control message is incorrect, the response message is a negative acknowledgment message.

21. The device according to claim 18 or 19, wherein the sending and receiving unit is further configured to receive a data packet, and the data packet comes from the user terminal or is sent to the user terminal; and
the processing unit is further configured to: generate a PTK and a GTK according to the PMK; encrypt the data packet by using the PTK if the data packet is a unicast packet; and encrypt the data packet by using the GTK if the data packet is a multicast packet.

22. The device according to claim 18 or claim 19, wherein the processing unit is further configured to determine the AP according to the identifier of the user terminal; and
the sending and receiving unit is further configured to send the identifier of the user terminal and the PMK to the AP.

23. The device according to claim 18 or claim 19, wherein the processing unit is further configured to generate a PTK and a GTK according to the PMK, and determine the AP according to the identifier of the user terminal; and
the sending and receiving unit is further configured to send the identifier of the user terminal, the PTK, and the GTK to the AP.

24. A network system, comprising a routing device and an access controller AC, wherein the routing device is an endpoint that initiates Extensible Authentication Protocol EAP authentication, the routing device is configured to manage a user terminal, and the AC is configured to manage an AP; wherein
the routing device is further configured to: receive a packet from an authentication server, wherein the packet carries an identifier of the user terminal and a pairwise master key PMK corresponding to the identifier of the user terminal; obtain the identifier of the user terminal and the PMK from the packet; and send a control message to the AC, wherein the control message carries the identifier of the user terminal and the PMK, and the user terminal accesses a WLAN by using the AP; and
the AC is configured to send a response message to the routing device, wherein the response message is used to respond to the control message.

25. The system according to claim 24, further comprising the AP.
